# FASCICULE DE BREVET EUROPEEN

(11) **EP 3 565 777 B1**
(45) Date de publication et mention de la délivrance du brevet: **18.03.2020**
(21) Numéro de dépôt: 18703073.9
(22) Date de dépôt: 24.01.2018
(51) Int. Cl.: B29D 30/00, B29D 30/46, B65H 19/24, B65H 19/14, B65H 19/22, B65H 19/26, B65H 20/30, B65H 20/32, B65H 20/34, B29C 48/00, B29C 48/08, B29C 48/28, B29C 48/88

(54) **PROCEDE ET INSTALLATION DE TRANCANNAGE EN CONTINU DE BANDELETTES DE GOMME AUTOUR DE BOBINES**
VERFAHREN UND VORRICHTUNG ZUM KONTINUIERLICHEN KREUZWICKELN VON GUMMIERSTREIFEN UM SPULEN
METHOD AND FACILITY FOR CONTINUOUSLY CROSSWINDING GUM STRIPS ABOUT SPOOLS

(30) Priorité: 14.02.2017 FR 1751174
(43) Date de publication de la demande: 13.11.2019
(73) Titulaire: Spoolex, 42230 Roche La Moliere (FR)
(72) Inventeur: LASSALLE, Luc, 42100 Saint-Etienne (FR); PAULET, Guillaume, 43240 Saint Just Malmont (FR); MONTUSCLAT, Christian, 07100 Roiffieux (FR)
(74) Mandataire: Cabinet Laurent & Charras
(86) Numéro de dépôt international: PCT/FR2018/050158
(87) Numéro de publication internationale: WO 2018/150116

(56) Documents cités:
- EP-A1- 0 621 124
- EP-A2- 1 095 892
- JP-A- H01 295 836
- JP-A- S58 122 846
- JP-A- 2014 073 589
- US-A- 2 718 362
- US-A1- 2009 249 597

## Description

### DOMAINE TECHNIQUE

L'invention concerne le domaine technique du trancannage autour de bobines, de bandelettes de matériau caoutchouteux, notamment de gomme, utilisées pour la fabrication d'un pneumatique par exemple.

L'invention concerne notamment un procédé et une installation de trancannage en continu de bandelettes de gomme autour de bobines, à partir d'une nappe de gomme extraite en continu d'une extrudeuse.

Par « gomme », on entend une pâte à base de caoutchouc, utilisée dans la fabrication d'un pneumatique. Cette pâte à base de caoutchouc peut intégrer un élément de renfort, tel que du tissu de la corde ou du câble, ou tout autre composant ou élément structurel.

Le trancannage est l'action d'enrouler de manière ordonnée une bandelette autour d'une bobine de plus grande largeur que la bandelette, spire par spire et couche par couche. Une opération de trancannage est réalisée en fixant tout d'abord l'une des extrémités d'une bandelette à la bobine. Ensuite, la bobine est entrainée en rotation autour de son axe de révolution de manière à enrouler la bandelette. A ce stade, pour réaliser l'opération de trancannage en tant que telle il est possible, soit de déplacer latéralement la bobine le long de son axe de révolution, soit de déplacer transversalement la bandelette par l'intermédiaire d'un bras de dépose par exemple, bien connu de l'état de la technique.

L'essentiel réside dans le fait d'avoir un déplacement relatif entre la bobine et la bandelette à trancanner.

### ETAT ANTERIEUR DE LA TECHNIQUE

Dans l'état actuel de la technique, il est connu de fabriquer une nappe de gomme par l'intermédiaire d'une extrudeuse. En sortie de l'extrudeuse, la nappe est acheminée par l'intermédiaire de rouleaux de transitique et de refroidissement vers un premier module au niveau duquel la nappe refroidie est déposée sur un film support, appelé « liner », en matière plastique ou textile, puis est en enroulée en bobine d'environ 500 mm de largeur.

En pratique, lorsque la bobine de gomme est terminée, l'extrudeuse est stoppée, la nappe est coupée transversalement et la bobine est déchargée puis évacuée vers d'autres machines pour des opérations de déroulage de la bobine, de découpes de la nappe en bandelettes, et de trancannage des bandelettes autour de bobines.

La configuration actuelle est contraignante et présente plusieurs inconvénients, notamment liés aux diverses manipulations des bobines, aux diverses opérations d'enroulage et de déroulage, au stockage et à la conservation des bobines, à la perte de rendement liée à l'arrêt de l'extrudeuse, etc...

Il est également connu les documents EP 0 621 124 et JP 2014 073589 qui divulguent des procédés d'enroulage en continu selon le préambule de la revendication 1

### EXPOSE DE L'INVENTION

L'un des buts de l'invention est donc de remédier aux problèmes précités, et de fournir un procédé et une installation de trancannage en continu de bandelettes de gomme, notamment utilisées dans la fabrication d'un pneumatique, autour de bobines, à partir d'une nappe de gomme extraite en continu d'une extrudeuse.

A cet effet, il a été mis au point un procédé selon la revendication 1 comprenant des étapes consistant à :
- faire défiler en continu et refroidir la nappe en sortie de l'extrudeuse par l'intermédiaire de rouleaux de transitique et de refroidissement ;
- déposer en continu la nappe refroidie sur un film support déroulé en continu pour former un complexe;
- faire défiler le complexe dans un accumulateur.

Conformément à l'invention, le procédé comprend en outre des étapes consistant successivement à :
- en sortie de l'accumulateur, découper le complexe dans sa largeur en une pluralité de bandelettes ;
- réaliser un trancannage, à une vitesse initiale, de chacune bandelettes autour d'une bobine ;
- lorsque les bobines sont terminées, stopper le trancannage des bandelettes et faire s'accumuler dans l'accumulateur le complexe en provenance de l'extrudeuse ;
- pendant que le complexe s'accumule, découper transversalement les bandelettes en amont des bobines et finir l'enroulage de l'extrémité libre des bandelettes découpées autour des bobines, évacuer les bobines et approvisionner de nouvelles bobines vides, rattacher l'extrémité libre des bandelettes auxdites bobines vides ;
- redémarrer le trancannage de chacune des bandelettes autour des bobines vides à une vitesse supérieure à la vitesse initiale jusqu'à décharger complètement l'accumulateur, puis reprendre l'enroulage à la vitesse initiale.

De cette manière, l'invention permet de fabriquer directement et en continu des bobines de bandelettes de gomme trancannées à partir d'une nappe en sortie d'extrudeuse. L'invention permet de s'affranchir des étapes d'enroulage, de manutention, de stockage, et de déroulage de bobines en vue d'une opération de trancannage distinctes. Le rendement est optimal. L'extrudeuse produit une nappe en continu, sans arrêt, les bobines de bandelettes trancannées sont formées en continu.

Avantageusement, le procédé comprend une étape consistant à laisser la nappe former une boucle entre le dépôt de la nappe sur le film support et le refroidissement de la nappe par l'intermédiaire des rouleaux de transitique et de refroidissement.

De cette manière, le contrôle visuel de la hauteur de la boucle permet de contrôler aisément la vitesse du film support pour faire défiler la nappe en sortie d'extrudeuse.

Afin d'optimiser davantage le procédé selon l'invention, les bobines de bandelettes trancannées finies sont évacuées et remplacées par des bobines vides, automatiquement et par l'intermédiaire d'un robot. Ces opérations sont effectuées en temps masqué sur l'enroulage des bobines en cours. Bien entendu, et sans sortir du cadre de l'invention, les bobines finies peuvent être, après avoir été poussées automatiquement hors du module de trancannage, évacuées et remplacées manuellement par un opérateur.

L'invention vise à protéger également une installation selon la revendication 4 pour la mise en œuvre du procédé décrit ci-avant, et comprenant successivement
- un module de refroidissement comportant des rouleaux de transitique et de refroidissement pour faire défiler et refroidir la nappe en sortie d'extrudeuse ;
- un module de complexage comprenant un rouleau de dévidage d'un film support sous la nappe refroidie pour former un complexe;
- un accumulateur au travers duquel le complexe est destiné à défiler en continu en sortie du module de complexage.

Selon l'invention, l'installation comprend en outre et successivement :
- un module de découpe comprenant des lames de coupe du complexe dans sa largeur et en une pluralité de bandelettes ;
- un module de trancannage des bandelettes comprenant :
   - une pluralité de bobines entrainées en rotation et autour desquelles les bandelettes sont enroulées ;
   - des moyens de déplacement transversal relatif entre les bandelettes et les bobines pour le trancannage en tant que tel ;
   - des capteurs détectant que les bobines sont formées, assujettis à des moyens d'évacuation des bobines formées ;
   - des moyens de coupe transversale des bandelettes en amont des bobines formées ;

Toujours selon l'invention, l'installation comprend des moyens pour assujettir la vitesse de rotation des bobines à l'accumulateur de sorte que lorsque la rotation des bobines est arrêtée ou ralentie, le complexe s'accumule dans l'accumulateur, et lorsque l'enroulage des nouvelles bobines vides débute, la vitesse de rotation est accélérée pour décharger l'accumulateur du complexe accumulé, puis est ralentie jusqu'à une vitesse initiale.

De préférence, les moyens de déplacement transversal relatif entre les bandelettes et les bobines comprennent chacun un bras de dépose sur lequel la bandelette est destinée à défiler. Le bras de dépose est monté mobile sur un rail pour se déplacer alternativement le long de la largeur de la bobine.

Selon une forme de réalisation particulière, les moyens de découpe comprennent un fourreau monté au niveau de chaque bras de dépose et à l'intérieur duquel la bandelette est destinée à défiler, chaque fourreau reçoit une lame de coupe mobile pour venir couper les bandelettes.

De préférence, le module de complexage comprend deux rouleaux de dévidage d'un film support, et un système de raboutage de l'extrémité d'un rouleau avec l'extrémité initiale de l'autre rouleau.

De cette manière, lorsqu'un rouleau de dévidage du film support est vide, le deuxième rouleau poursuit le dévidage, et le premier rouleau peut être remplacé, sans stopper le procédé.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique illustrant, de côté, l'installation de trancannage en continu de bandelettes de gomme selon l'invention ;
- la figure 2 est une représentation schématique similaire à celle de la figure 1, illustrant en détail le module de refroidissement et le module de complexage que comprend l'installation selon l'invention ;
- la figure 3 est une représentation schématique similaire à celle de la figure 1, illustrant en détail le module de découpe, et le module de trancannage des bandelettes que comprend l'installation selon l'invention ;
- la figure 4 est une représentation schématique illustrant en perspective le module de trancannage des bandelettes de l'installation selon l'invention ;
- la figure 5 est une représentation schématique similaire à celle de la figure 4, illustrant en détail un bras de dépose et une bobine du module de trancannage.

### EXPOSE DETAILLE DE L'INVENTION

L'invention concerne un procédé et une installation (1) de trancannage en continu de bandelettes (2) de gomme, notamment utilisées dans la fabrication d'un pneumatique. Les bandelettes possèdent une largeur d'environ 10 mm à 30 mm, et le trancannage des bandelettes (2) est effectué autour de bobines de 400 mm à 500 mm de large. Ces valeurs sont données à titre d'exemple, et ne sont nullement limitatives.

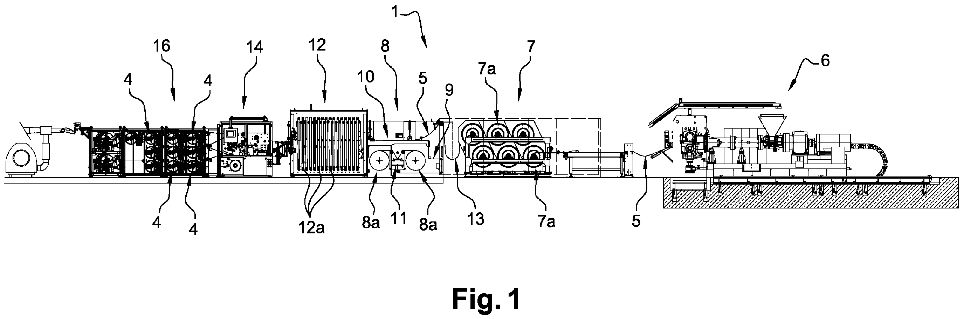

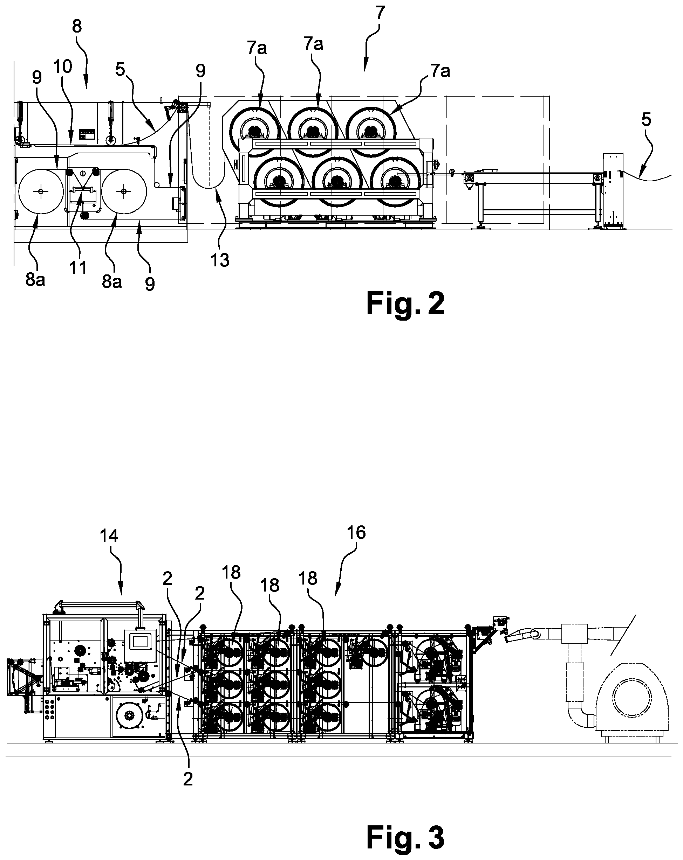

En référence aux figures 1 et 2, l'invention permet de former, en continu, des bobines (4) de bandelettes (2) trancannées à partir d'une nappe (5) de gomme extraite en continu d'une extrudeuse (6). En pratique, une extrudeuse (6) permet de fabriquer en continu une nappe (5) de gomme de 1600 mm de large par exemple.

L'installation (1) comprend un module de refroidissement (7) installé en sortie de l'extrudeuse (6). Le module de refroidissement (7) comprend des rouleaux (7a) de transitique et de refroidissement pour faire défiler et refroidir la nappe (5) directement issue de l'extrudeuse (6).

L'installation (1) comprend un module (8) dit de complexage, disposé à la sortie du module de refroidissement (7). Ainsi, en sortie du module de refroidissement (7), la nappe (5) est déposée sur un film support (9), tel que par exemple un film de textile ou un film plastique, lui-même déroulé en continu. Le film support (9) est de tout type approprié et doit pouvoir être découpé en bandelettes. Le module de complexage (8) comprend deux rouleaux (8a) de dévidage du film support (9). Les deux rouleaux de dévidage (8a) sont déroulés, l'un après l'autre, pour venir sous la nappe (5) et former un complexe (10) avec celle-ci. Le film support (9) supporte la nappe (5) et sera enroulé ultérieurement en bobines. Le module de complexage (8) comprend un système de raboutage (11), bien connu de l'état de la technique, permettant de solidariser, par exemple par collage, l'extrémité finale du premier rouleau (8a) de dévidage, avec l'extrémité initiale du deuxième rouleau (8a). Ainsi, lorsque le dévidage du premier rouleau (8a) est terminé, le dévidage du deuxième rouleau (8a) est poursuivi automatiquement, en lieu et place du premier rouleau (8a). Le premier rouleau (8a) peut alors être remplacé, soit manuellement par un opérateur, soit de manière automatique par un robot.

En sortie du module de complexage (8), le complexe (10) défile dans un accumulateur (12), connu de l'état de la technique, qui, au moyen de différents rouleaux de transitique (12a) mobiles et disposés à la manière d'un accordéon, permet d'allonger la distance parcourue par le complexe (10) à l'intérieur de l'accumulateur (12). En d'autres termes, le complexe (10) en défilement peut s'accumuler à l'intérieur de l'accumulateur (12), tout en stoppant son défilement en aval de l'accumulateur (12).

Afin de faire défiler le complexe (10), l'installation (1) comprend, de manière connue de l'Homme du métier, différents rouleaux d'entraînement motorisés positionnés pour tirer le film support (9) afin de ne pas détériorer la nappe (5) ou les bandelettes (2) de gomme. Afin de contrôler en temps réel la vitesse sur le film support (9), avant de pénétrer dans le module de complexage (8), la nappe (5) forme une boucle (13) dite de régulation, en suspension dans l'air. Le contrôle de la hauteur de la boucle (13) permet de vérifier si la vitesse sur le film support (9) est trop faible ou trop importante. En effet, plus la boucle (13) est haute et de petite dimension, plus la vitesse sur le film support (9) est importante, et inversement. Le contrôle de cette hauteur peut être réalisé, soit par un opérateur, soit par l'agencement de capteurs, et permet de ralentir ou d'accélérer la vitesse de défilement du film support (9).

En sortie de l'accumulateur (12), le complexe (10) est dirigé vers un module de découpe (14) comprenant une pluralité de lames de coupe disposées pour découper longitudinalement le complexe (10) dans sa largeur afin de former une pluralité de bandelettes (2). Le module de découpe (14) est bien connu de l'état la technique et ne sera pas décrit plus en détail.

En référence aux figures 3 à 5, en sortie du module de découpe (14), les bandelettes (2) de complexe (10) sont acheminées vers un module de trancannage (16) pour enrouler et trancanner chaque bandelette (2) autour d'une bobine (4). À cet effet, le module de trancannage (16) comprend une pluralité de barres (18) rotatives et amovibles, autour desquelles sont montées les bobines (4) qui sont reliées aux bandelettes (2).

En pratique, des moteurs permettent d'entraîner en rotation les barres (18). Pour réaliser l'opération de trancannage, le module de trancannage (16) comprend des moyens (15) de déplacement transversal relatif entre les bandelettes (2) et les bobines (4). Dans un exemple particulier, les bobines (4) peuvent être montées mobiles de manière à se déplacer alternativement en va-et-vient selon un mouvement de translation le long de leur axe de révolution. Selon l'exemple illustré, chaque bobine (4) est assujettie à un bras de dépose (17) des bandelettes (2), sur lequel la bandelette (2) est destinée à défiler. Le bras de dépose (17) est monté mobile sur un rail (19), parallèle à la bobine (4), pour se déplacer alternativement et en va-et-vient le long de la largeur de la bobine (4), et parallèlement à cette dernière.

En pratique, les bobines (4) sont entrainées en rotation à une vitesse initiale, et les bras de dépose (17) sont déplacés alternativement le long de la largeur des bobines (4) pour réaliser le trancannage des bandelettes (2) autour des bobines.

Lorsque les bobines (4) sont pratiquement formées, c'est-à-dire qu'elles ont atteint un diamètre souhaité, les bobines pleines (4) sont évacuées par le côté, c'est-à-dire selon la direction des axes de révolution des bobines (4), soit manuellement par un opérateur, soit de manière automatique.

A cet effet, l'enroulage et le défilement des bandelettes (2) sont stoppés, et l'accumulateur (12) est actionné afin que le complexe (10) en provenance de l'extrudeuse (6) s'y accumule. De cette manière, l'extrudeuse (6) reste en fonctionnement et la fabrication de la nappe (5) est toujours continue. En pratique, l'accumulateur (12) permet d'accumuler le complexe (10) pendant environ 1 min par exemple, c'est-à-dire qu'il peut accumuler environ 50 m de complexe (10).

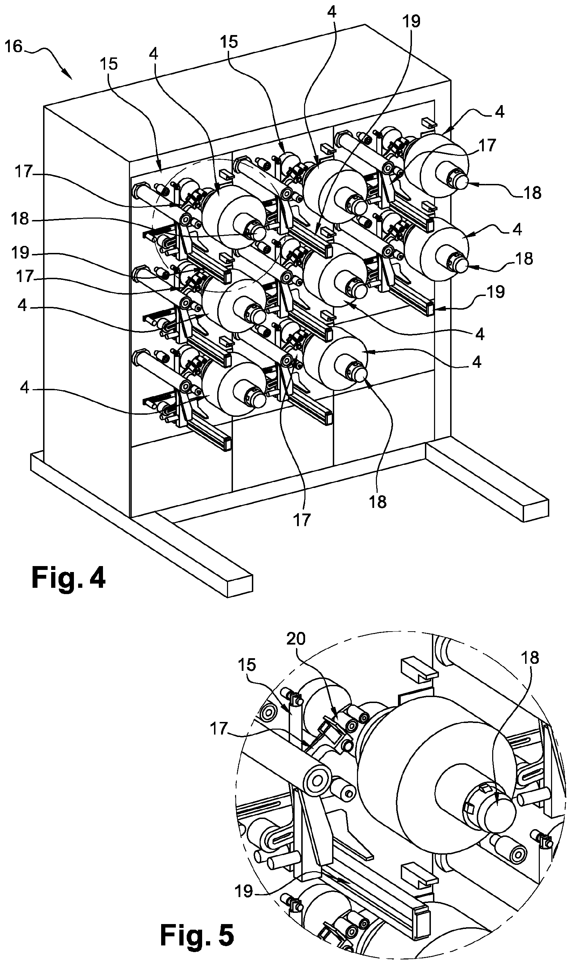

Pendant que le complexe (10) s'accumule dans l'accumulateur (12), le module de trancannage (16) réalise une découpe transversale des bandelettes (2) en amont des bobines (4). Pour ce faire, et en référence à la figure 5, chaque bras de dépose (17) comprend un fourreau (20) à l'intérieur duquel la bandelette (2) défile. Le fourreau (20) reçoit une lame de coupe, mobile pour venir découper transversalement la bandelette (2).

Lorsque les bandelettes (2) sont découpées, les barres (18) qui supportent les bobines (4) pratiquement formées, sont entraînées en rotation pour finir l'enroulage de l'extrémité des bandelettes (2) autour desdites bobines (4), en combinaison avec un rouleau d'appui qui permet de plaquer l'extrémité libre desdites bandelettes (2) sur les bobines (4).

Ensuite, les bobines pleines (4) sont extraites et remplacées par des nouvelles bobines vides. L'extrémité amont des bandelettes (2) découpées est alors rattachées, par exemple manuellement, aux bobines vides. La rotation desdites bobines est ensuite redémarrée à une vitesse supérieure à la vitesse initiale jusqu'à décharger complètement l'accumulateur (12) du complexe (10) qui s'y était accumulé. Lorsque l'accumulateur (12) déchargé, la rotation des bobines et le trancannage des bandelettes (2) sont repris à la vitesse initiale.

En pratique, l'installation (1) comprend des capteurs qui détectent que les bobines (4) sont formées, c'est-à-dire qu'elles ont atteint le diamètre désiré. Ces capteurs sont assujettis à la rotation des barres (18) recevant les bobines. La vitesse de rotation des barres (18) est également assujettie à l'accumulateur (12) de sorte que lorsque la rotation des bobines est arrêtée ou ralentie, le complexe (10) s'accumule automatiquement dans l'accumulateur (12) et, lorsque l'enroulage des nouvelles bobines (4) débute, la vitesse de rotation des barres (18) est accélérée pour décharger l'accumulateur (12) du complexe (10) accumulé, puis est ralentie jusqu'à la vitesse initiale. Bien entendu, la vitesse de déplacement du bras de dépose (17) est également assujettie à la vitesse de rotation des barres (18) pour l'opération de trancannage.

L'installation (1) permet donc de réaliser, en continu, un trancannage automatique des bandelettes (2) autour de bobines (4), sans arrêt de l'extrudeuse (6).

L'approvisionnement de nouvelles bobines et l'évacuation des bobines (4) formées peuvent être automatiques, notamment par l'intermédiaire de tourets comprenant chacun deux barres (18) parallèles, dont une barre (18) avec au moins une bobine (4) autour de laquelle la bandelette est trancannée, et une barre (18) avec au moins une bobine vide. Ainsi, lorsque la bobine (4) est terminée, la bobine vide est déplacée pour venir en contact avec la bandelette en amont de la bobine terminée de manière à démarrer l'enroulement de la bandelette autour de la bobine vide. Ensuite, un organe d'appui est déplacé pour venir en appui contre la bandelette entre la bobine terminée et la bobine vide, et une lame de coupe est déplacée pour couper transversalement la bandelette, en contre-appui de l'organe d'appui. Ensuite, la bobine vide est entrainée en rotation pour l'enroulage de la bandelette et la formation d'une nouvelle bobine (4).

## Revendications

1. Procédé de trancannage en continu de bandelettes (2) de gomme, notamment utilisées dans la fabrication d'un pneumatique, autour de bobines (4), à partir d'une nappe (5) de gomme extraite en continu d'une extrudeuse (6), le procédé comprenant des étapes consistant à :
- faire défiler en continu et refroidir la nappe (5) en sortie de l'extrudeuse (6) par l'intermédiaire de rouleaux (7a) de transitique et de refroidissement ;
- déposer en continu la nappe (5) refroidie sur un film support (9) déroulé en continu pour former un complexe (10) ;
- faire défiler le complexe (10) dans un accumulateur (12) ;
***caractérisé* en ce qu'**il comprend des étapes consistant successivement à :
- en sortie de l'accumulateur (12), découper le complexe (10) dans sa largeur en une pluralité de bandelettes (2) ;
- réaliser un trancannage, à une vitesse initiale, de chacune bandelettes autour d'une bobine ;
- lorsque les bobines (4) sont terminées, stopper le trancannage des bandelettes (2) et faire s'accumuler dans l'accumulateur (12) le complexe (10) en provenance de l'extrudeuse (6) ;
- pendant que le complexe (10) s'accumule, découper transversalement les bandelettes (2) en amont des bobines (4) et finir l'enroulage de l'extrémité libre des bandelettes (2) découpées autour des bobines (4), évacuer les bobines (4) et approvisionner de nouvelles bobines vides, rattacher l'extrémité libre des bandelettes (2) auxdites bobines vides ;
- redémarrer le trancannage de chacune des bandelettes (2) autour des bobines vides à une vitesse supérieure à la vitesse initiale jusqu'à décharger complètement l'accumulateur (12), puis reprendre l'enroulage à la vitesse initiale.

2. Procédé selon la revendication 1, ***caractérisé* en ce qu'**il comprend une étape consistant à laisser la nappe (5) former une boucle (13) entre le dépôt de la nappe (5) sur le film support (9) et le refroidissement de la nappe (5).

3. Procédé selon la revendication 1, ***caractérisé* en ce que** les bobines (4) sont évacuées et remplacées par des bobines vides, automatiquement et par l'intermédiaire d'un robot.

4. Installation (1) de trancannage en continu de bandelettes (2) de gomme, notamment utilisées dans la fabrication d'un pneumatique, autour de bobines (4), à partir d'une nappe (5) de gomme extraite en continu d'une extrudeuse (6), l'installation (1) comprenant successivement :
- un module de refroidissement (7) comportant des rouleaux (7a) de transitique et de refroidissement pour faire défiler et refroidir la nappe (5) en sortie d'extrudeuse (6) ;
- un module de complexage (8) comprenant un rouleau (8a) de dévidage d'un film support (9) sous la nappe (5) refroidie pour former un complexe (10) ;
- un accumulateur (12) au travers duquel le complexe (10) est destiné à défiler en continu en sortie du module de complexage (8) ;
l'installation est **caractérisée en ce qu'**elle comprend en outre et successivement:
- un module de découpe (14) comprenant des lames de coupe (15) du complexe (10) dans sa largeur et en une pluralité de bandelettes (2) ;
- un module de trancannage (16) des bandelettes (2) comprenant :
• une pluralité de bobines (4) entrainées en rotation et autour desquelles les bandelettes (2) sont enroulées ;
• des moyens (15) de déplacement transversal relatif entre les bandelettes (2) et les bobines (4) pour le trancannage en tant que tel ;
• des capteurs détectant que les bobines (4) sont formées, assujettis à des moyens d'évacuation des bobines (4) formées ;
• des moyens de coupe (23) transversale des bandelettes (2) en amont des bobines (4) formées ;
***et en ce que*** l'installation comprend des moyens pour assujettir la vitesse de rotation des bobines (4) pour l'enroulage des bandelettes (2) à l'accumulateur (12), de sorte que lorsque la rotation des bobines (4) est arrêtée ou ralentie, le complexe (10) s'accumule dans l'accumulateur (12), et lorsque l'enroulage de nouvelles bobines vides débute, la vitesse de rotation est accélérée pour décharger l'accumulateur (12) du complexe (10) accumulé, puis est ralentie jusqu'à une vitesse initiale.

5. Installation (1) selon la revendication 4, ***caractérisée* en ce que** les moyens de déplacement transversal relatif entre les bandelettes (2) et les bobines (4) comprennent chacun un bras de dépose (17) sur lequel la bandelette (2) est destinée à défiler, le bras de dépose (17) est monté mobile sur un rail (19) pour se déplacer alternativement le long de la largeur de la bobine (4).

6. Installation (1) selon la revendication 5, ***caractérisée* en ce que** les moyens de découpe (23) comprennent un fourreau (20) monté au niveau de chaque bras de dépose (17) et à l'intérieur duquel la bandelette (2) est destinée à défiler, chaque fourreau (20) reçoit une lame de coupe mobile pour venir couper les bandelettes (2).

7. Installation (1) selon la revendication 4, ***caractérisée* en ce que** le module de complexage (8) comprend deux rouleaux (8a) de dévidage d'un film support (9), et un système de raboutage (11) de l'extrémité finale d'un rouleau (8a) avec l'extrémité initiale de l'autre rouleau (8a).

## Patentansprüche

1. Verfahren zum kontinuierlichen Aufwickeln von Gummistreifen (2), die insbesondere bei der Herstellung von Reifen verwendet werden, um Spulen (4) herum, ausgehend von einer Gummibahn (5), die kontinuierlich aus einem Extruder (6) extrahiert wird, wobei das Verfahren die folgenden Schritte umfasst:
- die Bahn (5) am Ausgang des Extruders (6) über Transport- und Kühlrollen (7a) kontinuierlich durchlaufen zu lassen und zu kühlen;
- die gekühlte Bahn (5) kontinuierlich auf eine Trägerfolie (9), die kontinuierlich abgewickelt wird. aufzulegen, um einen Komplex (10) zu bilden;
- den Komplex (10) durch einen Akkumulator (12) durchlaufen zu lassen;
***dadurch gekennzeichnet, dass*** es die nachstehenden, aufeinander folgenden Schritte enthält:
- am Ausgang des Akkumulators (12) den Komplex (10) in seiner Breite in mehrere Streifen (2) zu schneiden;
- mit einer Ausgangsgeschwindigkeit jeden Streifen auf eine Spule aufzuwickeln;
- wenn die Spulen (4) fertig sind, das Aufwickeln der Streifen (2) stoppen und im Akkumulator (12) den Komplex (10) aus dem Extruder (6) akkumulieren lassen;
- während sich der Komplex (10) akkumuliert, Streifen (2) vor den Spulen (4) quer abschneiden und Aufrollen des freien Endstücks der Streifen (2), das um die Spulen (4) herum abgeschnitten ist, beenden, Spulen (4) leeren und die neuen leeren Spulen versorgen, freies Endstück der Streifen (2) an diesen leeren Spulen befestigen; Aufwickeln jedes Streifens (2) um die leeren Spulen herum mit einer höheren Geschwindigkeit als die Ausgangsgeschwindigkeit neu starten, bis der Akkumulator (12) vollständig geleert ist, dann das Aufwickeln mit der Ausgangsgeschwindigkeit neu starten.

2. Verfahren nach Anspruch 1, ***dadurch gekennzeichnet, dass*** es einen Schritt umfasst, in dem die Bahn (5) eine Schleife (13) zwischen dem Auflegen der Bahn (5) auf der Trägerfolie (9) und dem Kühlen der Bahn (5) bilden kann.

3. Verfahren nach Anspruch 1, ***dadurch gekennzeichnet, dass*** die Spulen (4) automatisch und mittels eines Roboters geleert und durch leere Spulen ersetzt werden.

4. Anlage (1) zum kontinuierlichen Aufwickeln von Gummistreifen (2), die insbesondere bei der Herstellung von Reifen verwendet werden, um Spulen (4) herum, ausgehend von einer Gummibahn (5), die kontinuierlich aus einem Extruder (6) extrahiert wird, wobei die Anlage (1) nacheinander umfasst:
- ein Kühlmodul (7) mit Transport- und Kühlrollen (7a), um die Bahn (5) am Ausgang des Extruders (6) kontinuierlich durchlaufen zu lassen und zu kühlen;
- ein Kaschiermodul (8) mit einer Abwickelrolle (8a) für eine Trägerfolie (9) unter der Bahn (5), die gekühlt wird, um einen Komplex (10) zu bilden;
- ein Akkumulator (12), durch den der Komplex (10) kontinuierlich durchläuft, am Ausgang des Kaschiermoduls (8);
wobei die Anlage **dadurch gekennzeichnet ist, dass** sie außerdem und aufeinander folgend enthält:
- ein Schneidmodul (14) mit Schneidklingen (15) für den Komplex (10) in seiner Breite und in mehrere Streifen (2);
- ein Aufwickelmodul (16) für die Streifen (2) mit:
• mehreren Spulen (4), die in Rotation angetrieben werden, um die die Streifen (2) gewickelt werden;
• Mittel (15) zur relativen Querverschiebung zwischen den Streifen (2) und den Spulen (4) zum Aufwickeln an sich;
• Sensoren, die erkennen, dass die Spulen (4) fertiggestellt sind, die von Entleervorrichtungen für die fertiggestellten Spulen (4) abhängen;
• Schneidvorrichtungen (23) in Querrichtung der Streifen (2) vor den fertiggestellten Spulen (4);
***und dadurch dass*** die Anlage Vorrichtungen enthält, um die Rotationsgeschwindigkeit der Spulen (4) zum Aufwickeln der Streifen (2) vom Akkumulator (12) abhängig zu machen, so dass, wenn die Rotation der Spulen (4) angehalten oder verlangsamt wird, sich der Komplex (10) im Akkumulator (12) sammelt und wenn das Aufwickeln der neuen, leeren Spulen beginnt, die Rotationsgeschwindigkeit beschleunigt wird, um aus dem Akkumulator (12) den angesammelten Komplex (10) zu entfernen und dann bis zu einer Ausgangsgeschwindigkeit verlangsamt wird.

5. Anlage (1) nach Anspruch 4, ***dadurch gekennzeichnet, dass*** die Vorrichtungen zur relativen Querverschiebung zwischen den Streifen (2) und den Spulen (4) jeweils einen Abnehmerarm (17) enthalten, über den der Streifen (2) laufen soll, der Abnehmerarm (17) mobil auf einer Schiene (19) montiert ist, um sich alternativ entlang der Breite der Spule (4) verschieben zu können.

6. Anlage (1) nach Anspruch 5, ***dadurch gekennzeichnet, dass*** die Schneidvorrichtungen (23) eine Hülle (20) enthalten, die in Höhe jedes Abnehmerarms (17) montiert ist und in deren Inneren der Streifen (2) durchlaufen soll, dass jede Hülle (20) mit einer mobilen Schneidklinge ausgerüstet wird, um die Streifen (2) zu schneiden.

7. Anlage (1) nach Anspruch 4, ***dadurch gekennzeichnet, dass*** das Kaschiermodul (8) zwei Abwickelrollen (8a) für eine Trägerfolie (9) sowie ein Anfügesystem (11) des letzten Endstücks einer Rolle (8a) an das Anfangsstück einer anderen Rolle (8a) enthält.

## Claims

1. A method of continuously winding strips (2) of rubber, in particular in the manufacture of a tire, around spools (4), from a mat (5) of rubber continuously extracted from an extruder (6), the method comprising steps consisting in:
- making the mat (5) run continuously and cool it at the output of the extruder (6) by means of transitioning and cooling rollers (7a);
- continuously applying the cooled mat (5) on a carrier film (9) continuously paid out to form a complex (10);
- having the complex (10) run through an accumulator (12);
***characterized* in that** it comprises steps consisting successively in:
- at the output of the accumulator (12), cutting the complex (10) in its width into a plurality of strips (2) ;
- winding of each strip around a spool at an initial speed;
- when the spools (4) are complete, stopping the winding of the strips (2) and letting the complex (10) from the extruder (6) accumulate in the accumulator (12);
- while the complex (10) is accumulating, cutting the strips (2) upstream of the spools (4) transversely and finishing the winding of the free end of the cut strips (4) around the spools (2), evacuating the spools (4) and procuring new empty spools, reattaching the free end of the strips (2) to said empty spools;
- restarting the winding of each of the strips (2) around the empty spools at a speed higher than the initial speed until the accumulator (12) is fully loaded, then restarting the winding at the initial speed.

2. Method according to the claim *1,* ***characterized* in that** it comprises a step consisting in allowing the mat (5) to form a loop (13) between the application of the mat (5) on the carrier film (9) and the cooling of the mat (5).

3. Method according to the claim *1, **characterized in that*** the spools (4) are removed and replaced by empty spools , automatically and by means of a robot.

4. An installation (1) for continuously winding strips (2) of rubber, in particular in the manufacture of a tire, around spools (4), from a mat (5) of rubber continuously extracted from an extruder (6), the installation (1) comprising successively:
- a cooling module (7) comprising transitioning and cooling rollers (7a) for driving and cooling the mat (5) at the extruder (6) output.
- a complexing module (8) comprising a paying out roller (8a) for the carrier film (9) under the cooled mat (5) to form a complex (10).
- an accumulator (12) through which the complex (10) is intended to run continuously at the output of the complexing module (8);
the installation is **characterized in that** it comprises in addition and successively:
- a cutting module (14) comprising cutting blades (15) for cutting the complex (10) across its width into a plurality of strips (2).
- a winding module (16) for the strips (2) comprising :
• a plurality of spools (4) driven in rotation and around which the strips (2) are wound
• means (15) for relative transverse displacement between the strips (2) and the reels (4) for actual winding.
• sensors detecting that the spools (4) are formed, subject to means for removing the formed spools (4).
• means (23) for transversely cutting the strips (2) upstream of the spools (4) formed. *and **in that*** the installation comprises means for subjecting the rotational speed of the spools (4) for winding the strips (2) to the accumulator (12), so that when the rotation of the spools (4) is stopped or slowed down, the complex (10) accumulates in the accumulator (12), and when the winding of new empty spools starts, the rotational speed is accelerated to unload the accumulator (12) of the accumulated complex (10), and is then slowed down to an initial speed.

5. Installation (1) according to claim 4, ***characterized in that*** the means for relative transverse movement between the strips (2) and spools reels (4) each comprise an application arm (17) on which the strip (2) is intended to run, the depositing arm (17) being mounted so as to be free to move on a rail (19) so as to move alternately over the width of the reel (4).

6. Installation (1) according to claim 5, ***characterized* in that** the cutting means (23) comprise a sheath (20) mounted at each application arm (17) and inside which the strip (2) is intended to run, each sheath (20) receiving a mobile cutting blade for cutting the strips (2).

7. Installation (1) according to claim 4, ***characterized in* that** the complexing module (8) comprises two rolls (8a) for paying out a carrier film (9), and a butt connecting system (11) for attaching the final end of one roll (8a) to the initial end of the other roll (8a).
